(19) Europäisches Patentamt
European Patent Office
Office européen des brevets

(11) **EP 4 390 330 A1**

(12) **EUROPEAN PATENT APPLICATION**
published in accordance with Art. 153(4) EPC

(43) Date of publication:
**26.06.2024 Bulletin 2024/26**

(51) International Patent Classification (IPC):
***G01D 5/353*** (2006.01)

(21) Application number: **21954192.7**

(52) Cooperative Patent Classification (CPC):
**G01D 5/353**

(22) Date of filing: **18.08.2021**

(86) International application number:
**PCT/JP2021/030223**

(87) International publication number:
**WO 2023/021619 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Neubrex Co., Ltd.**
**Kobe-shi, Hyogo 650-0023 (JP)**
• **OSAKA UNIVERSITY**
**Suita-shi**
**Osaka 565-0871 (JP)**

(72) Inventors:
• **KISHIDA, Kinzo**
**Kobe-shi, Hyogo 650-0023 (JP)**
• **MA, Ninshu**
**Suita-shi, Osaka 565-0871 (JP)**

(74) Representative: **Meissner Bolte Partnerschaft mbB**
**Patentanwälte Rechtsanwälte**
**Postfach 86 06 24**
**81633 München (DE)**

(54) **INTEGRATED IGA-DFOS SYSTEM**

(57) This integrated IGA-DFOS system includes: an optical fiber (3) attached to a measurement target to sense a physical quantity of the measurement target; a distribution-calculation-type optical fiber measurement device (4) which calculates the physical quantity of the measurement target from a sensing signal detected by the optical fiber (3) and obtains a physical quantity distribution state; and a fiber-mesh-incorporated IGA analysis tool having incorporated therein a fiber mesh which is modeled by a non-uniform rational B-spline basis function and forms a shape of the optical fiber (3). The physical quantity distribution state of the measurement target at an attachment position of the optical fiber (3), measured by the distribution-calculation-type optical fiber measurement device (4), is inputted to the fiber-mesh-incorporated IGA analysis tool, to obtain, through analysis, a physical quantity distribution state of the measurement target at a position other than the attachment position of the optical fiber (3).

FIG. 1

M/OIW-869-PC/EP

**Description**

TECHNICAL FIELD

The present invention relates to an integrated IGA-DFOS system.

BACKGROUND ART

A feature of distributed fiber optic sensing (hereinafter, may be referred to as DFOS) technology is that, in practical use, an installed optical fiber can provide an effective measurement value, i.e., has high reliability, under whatever situation the optical fiber is. As representative types of distributed fiber optic sensing technology, there are three types: a Raman type, a Brillouin type, and a Rayleigh type.

Meanwhile, a space as a passage where the optical fiber can be installed is limited in the degree of freedom, due to constraints on connection of the optical fiber, a given space, and the like (see Patent Documents 1 and 2 and Non-Patent Documents 1 to 6).

As a numerical analysis tool for considering and solving such a problem, a finite element method (FEM) has been widely used conventionally. In a case of using the finite element method, the following problems arise in reproducing an actual phenomenon.

a) In modeling a target shape by the finite element method, a mesh needs to be generated, and because of this and the like, the working time and the cost increase.

b) In many cases, a boundary condition or a load condition is determined in an idealized manner and therefore is different from an actual condition.

c) In a case where a shape or a material property is changed due to corrosion or defect, a model with the change reflected therein needs to be reconstructed, and this is not feasible in actual usage.

There is a numerical analysis method such as a boundary element method (BEM) which is a higher-efficiency analysis method as compared to the FEM, but such a method has many constraints in a case of being applied to a nonlinear problem. Therefore, it is impossible to adapt to a variety of needs.

Meanwhile, a NURBS-type mathematical model has been developed, a CAD technology having sufficient preciseness necessary for mechanical designing, a capability of coping with a complicated shape, and such a compact size as to be commercially available, has already become a standard in the manufacturing industry, and a large amount of CAD data has been accumulated. However, most of these have not been utilized effectively. In addition, these are the most convenient resources for optical fiber distribution measurement structurer health monitoring (SHM) in which real-time monitoring is to be performed, but technologies therefor have not been established yet.

CITATION LIST

PATENT DOCUMENTS

Patent Document 1: WO2004/048889 A1
Patent Document 2: WO2005/003689 A1

NON-PATENT DOCUMENTS

Non-Patent Document 1: K. Lim, et al., "Distributed fiber optic sensors for monitoring pressure and stiffness changes in out-of-round pipes", Struct. Control Health Monit. 2016; 23: 303-314, Published online 15 July 2015 in Wiley Online Library

Non-Patent Document 2: K. Nishiguchi, et al., "Error analysis for 3D shape sensing by fiber-optic distributed sensors", Proceedings of the 49th ISCIE International Symposium on Stochastic Systems Theory and Its Applications, Hiroshima, Nov. 3-4, 2017

Non-Patent Document 3: Y Mei, "Error analysis for distributed fiber optic sensing technology based on Brillouin scattering", Lucy Cavendish College, August, 2018

Non-Patent Document 4: A Piccolo, et al., "Non-invasive tunnel convergence measurement based on distributed optical fiber strain sensing", Smart Mater. Struct. 28, (2019)045008, (13pp), https://doi.org/10.1088/1361-665X/ab04cc

Non-Patent Document 5: K. Kishida, et al., "Study of Optical Fibers Strain-Temperature Sensitivities Using Hybrid Brillouin-Rayleigh System", PHOTONIC SENSORS/Vol. 4, No. 1, 2014: 1-11, DOI: 10.1007/s13320-013-0136-1

Non-Patent Document 6: Y Yamauchi, et al., "A STUDY OF THE STABILITY, RELIABILITY, AND ACCURACY OF NEUBRESCOPE-BASED PIPE THINNING DETECTION SYSTEM", The 3rd International Conference on Structual Health Monitoring of Intelligent Infrastructure, Vancouver, British Columbia, Canada, Nov. 13-16, 2007

## SUMMARY OF THE INVENTION

## PROBLEM TO BE SOLVED BY THE INVENTION

Specific features (circumstances) of targets to be investigated using numerical analysis, and problems of solutions therefor, are as follows.

a) A structure constructed on the basis of drawing designing is deteriorated through usage, to be a structure that is not an original ideal structure but has a defect. Current methods for monitoring the life cycle of an actual structure having such a defect or the like are insufficient in monitoring accuracy or the degree of freedom in usage.

b) In the current condition, core monitoring technologies and information collection capabilities which are applied to, for example, a damage or destruction process of an actual structure having a defect or deterioration, are extremely insufficient.

c) Numerical analysis for mass-produced products such as an automobile or an electronic component is generally performed, but regarding numerical analysis for a structure manufactured on the basis of individual specifications, there are no clear guidelines and a monitoring method therefor has not been determined.

d) In the current numerical analysis technologies, a load condition, a boundary condition, and a defect or deterioration of a structure are inputted as known information, to perform safety evaluation (forward analysis). On the other hand, a general analysis method for inversely analyzing a load condition, a boundary condition, a defect or deterioration, and the like on the basis of monitored partial information (inverse analysis) has not been established.

The present invention has been made to solve the above problems, and an object of the present invention is to develop an isogeometric analysis (IGA) numerical analysis model including an optical fiber (FO) mesh with an optical fiber (FO) installation plan merged therein, so as to reflect, in the FO installation plan (a plan about an installation route and the like, for facilitating installation), a coping measure for a risk factor, an evaluated load, a usage environment condition, and an influence of corrosion, an earthquake, or the like, which are concerns in CAD designing data.

Further, an object of the present invention is to, with the above development, realize a DFOS measurement system which is a distribution measurement system with high accuracy and high reliability for strain, temperature, and the like of a measurement target, and apply an IGA numerical analysis model (hereinafter, the numerical analysis model may be referred to as "fiber-mesh-incorporated IGA analysis model") to instantly measure deformation of the measurement target and monitor the weight load condition remotely, thereby allowing inverse analysis for deformation and load (in-plane load and out-of-plane load) of the measurement target including a part where the FO is not installed, thus making it possible to instantly measure deformation of the measurement target and monitor the weight load condition remotely.

## MEANS TO SOLVE THE PROBLEM

An integrated IGA-DFOS system according to the present invention includes: an optical fiber which is attached to a measurement target and senses a physical quantity of the measurement target; a distribution-calculation-type optical fiber measurement device which calculates the physical quantity of the measurement target on the basis of a sensing signal detected by the optical fiber and obtains a distribution state of the physical quantity; and a fiber-mesh-incorporated IGA analysis tool having incorporated therein a fiber mesh which is modeled by a non-uniform rational B-spline basis function and forms a shape of the optical fiber.

The distribution state of the physical quantity of the measurement target at an attachment position of the optical fiber, measured in real time by the distribution-calculation-type optical fiber measurement device, is inputted to the fiber-mesh-incorporated IGA analysis tool, to obtain a distribution state of the physical quantity of the measurement target at a position other than the attachment position of the optical fiber.

EFFECT OF THE INVENTION

With the integrated IGA-DFOS system according to the present invention, it becomes possible to reflect, in the FO installation plan (a plan about an installation route and the like, for facilitating installation), a coping measure for a risk factor, an evaluated load, a usage environment condition, and an influence of corrosion, an earthquake, or the like, which are concerns in CAD designing data.

In addition, deformation and load (in-plane load and out-of-plane load) of the measurement target including a part where the FO is not installed are inversely analyzed, thus making it possible to instantly measure deformation of the measurement target and monitor the weight load condition remotely.

BRIEF DESCRIPTION OF THE DRAWINGS

FIG. 1 is a block diagram illustrating the configuration of an integrated IGA-DFOS system of Embodiment 1.

FIG. 2 shows an example of a two-dimensional NURBS curve in the integrated IGA-DFOS system of Embodiment 1.

FIG. 3 illustrates moving average fiber strain in the integrated IGA-DFOS system of Embodiment 1.

FIG. 4 illustrates a flow of elastic stress analysis and fiber strain calculation at all sampling points in an IGA numerical analysis model in the integrated IGA-DFOS system of Embodiment 1.

FIG. 5 shows an experimental model for illustrating an application example of formulation proposed with an IGA numerical analysis model in the integrated IGA-DFOS system of Embodiment 1.

FIG. 6 shows the relationship between the value of the maximum strain of an optical fiber and a displacement value of a cylindrical pipe in the experimental model shown in FIG. 5.

FIG. 7 shows the relationship between a simulation result of strain distribution of the optical fiber using the IGA numerical analysis model and experimental data obtained by the experimental model.

FIG. 8 illustrates inverse IGA in the IGA numerical analysis model, using a load along the cylindrical pipe as an example.

FIG. 9 shows a simulation result of pressure distribution in a cylindrical pipe longitudinal direction optimized by the IGA numerical analysis model.

FIG. 10 shows the relationship between a simulation result of fiber strain optimized by the IGA numerical analysis model and experimental data obtained by the experimental model.

FIG. 11 is a table showing evaluation of effects of inverse IGA to which the IGA numerical analysis model is applied.

DESCRIPTION OF EMBODIMENTS

Embodiment 1

Outline of integrated IGA-DFOS system

An integrated IGA-DFOS system of Embodiment 1 will be described with reference to the drawings.

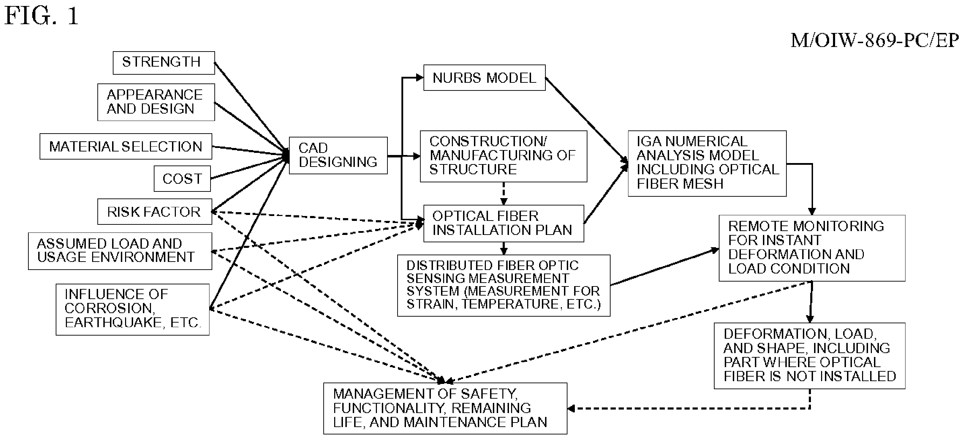

FIG. 1 is a block diagram illustrating the configuration of the integrated IGA-DFOS system of Embodiment 1 newly developed for solving the above-described problems. In FIG. 1, solid-line arrows indicate items relevant to elements composing the integrated IGA-DFOS system of Embodiment 1, and dotted-line arrows indicate ripple effects of the integrated IGA-DFOS system of Embodiment 1.

In order to meet requirements of strength, outer appearance, shape, material selection, cost, risk coping measure, and the like for solving the above-described problems, an isogeometric analysis (IGA) numerical analysis model including an optical fiber (FO) mesh with a NURBS (abbreviation of non-uniform rational B-spline) model and an FO installation plan merged therein, which are main elements to be realized by CAD designing, has been newly developed.

With development of the IGA numerical analysis model, it becomes possible to reflect, in the FO installation plan (a plan about an installation route and the like, for facilitating installation), a coping measure for a risk factor, an evaluated load, a usage environment condition, and an influence of corrosion, an earthquake, or the like, which are concerns in CAD designing data.

Further, with the above development, a DFOS measurement system which is a distribution measurement system with high accuracy and high reliability for strain, temperature, and the like of a measurement target is realized and an IGA numerical analysis model obtained by modeling the FO mesh by a NURBS basis/shape function (hereinafter, the numerical analysis model may be referred to as "fiber-mesh-incorporated IGA analysis model") is applied, whereby it becomes possible to instantly measure deformation of the measurement target and monitor the weight load condition remotely, and on the basis of these, it becomes possible to inversely analyze deformation and load (in-plane load and out-of-plane load) of the measurement target including a part where the FO is not installed.

Thus, it becomes possible to reflect a coping measure for a risk factor, an evaluated load, a usage environment condition, and an influence of corrosion, an earthquake, or the like, and it becomes possible to instantly measure deformation of the measurement target and monitor the weight load condition remotely. As a result, management for safety, functionality, the remaining life, and a maintenance plan of a measurement monitoring target system (hereinafter, may be referred to as a remote structure monitoring system) is expected to be enhanced in reliability and reduced in cost.

Regarding the NURBS model and the optical fiber (FO) installation plan relevant to construction and manufacturing of a structure, which are main elements to be realized by CAD designing, the above-described FO mesh is modeled by a NURBS basis/shape function and therefore generation of the mesh can be easily performed by simple input from CAD to an IGA system. Thus, the measurement monitoring target system can be integrated and unified, enhanced in efficiency, and industrialized.

Details of integrated IGA-DFOS system

First, the details of main constituent elements of the integrated IGA-DFOS system of Embodiment 1 will be described. The integrated IGA-DFOS system of embodiment 1 is composed of two main constituent parts, i.e., a part relevant to FO sensing technology and a part relevant to fiber-mesh-incorporated IGA analysis technology.

The former FO sensing technology has an advantage that acquired data has reality and a partial phenomenon of a measurement target can be grasped, but has a problem that the real nature of the phenomenon might not be directly reflected.

On the other hand, the latter fiber-mesh-incorporated IGA analysis technology is a technology based on a theory and has an advantage that the entirety of a measurement target including the inside and the outside thereof can be grasped. In addition, the fiber-mesh-incorporated IGA analysis technology has a possibility that the real nature of a phenomenon can be figured out.

In the integrated IGA-DFOS system of embodiment 1, the above two main constituent parts are merged to realize a system that has both of their advantages while solving their problems, and thus a remote structure monitoring system in which a real-time distribution sensing function of the DFOS and a fiber-mesh-incorporated IGA analysis model which is a high-efficiency numerical analysis model (may be referred to as an analysis model) are integrated has been newly developed.

That is, an IGA tool is used in order to include DFOS information based on proposal of an optical fiber mesh model (hereinafter, may be simply referred to as a fiber mesh model). An analysis model used in the IGA tool can be directly acquired from CAD (a basis function used in CAD is used as a shape function), and an initial condition and a boundary condition can be directly or indirectly provided from the DFOS in real time or remotely.

Distributed fiber optic sensing

An optical fiber sensor can execute distribution measurement by a single fiber without multiplexing the sensor. In particular, a TW-COTDR method based on Rayleigh frequency shift, which is used for measuring strain, is a method using a Rayleigh backscatter phenomenon which is elastic scattering (due to random refractive index variation along an optical fiber occurring when light passes through the optical fiber), and change in strain or temperature causes the Rayleigh frequency shift. Accordingly, a frequency difference measured between a base state and a reference state via cross-correlation is compared, whereby objective strain or temperature is obtained. In this method, high resolution (cm order) and stable accuracy (less than 0.1 $\mu\varepsilon$) are achieved.

Formulation of integrated IGA and DFOS

First, a coordinate system in IGA will be described. In single-parameter formulation as in IGA, there are mainly three coordinate systems (spaces). The first space is a Gaussian space (range: -1 to 1) in which Gaussian integral points are defined. The second space is a parametric space in which a basis function is evaluated. As terms in IGA, a parent element and a normalized knot vector of a NURBS shape are also expressed. The second space is a physical space where a shape itself is present.

Coordinate transformation from the Gaussian space to the parametric space is in accordance with linear mapping (Expression (1)).

[Mathematical 1]

$$\xi = \frac{1}{2} \left[ (\xi_{i+1} - \xi_i)\tilde{\xi} + (\xi_{i+1} + \xi_i) \right] \qquad (1)$$

Here, $\{\xi_i, \xi_{i+1}\}$ is a knot span, and $J_1$ (Expression (2)) is the Jacobian from the parametric space to the Gaussian space. A parametric curve $c(\xi)$ is defined by a product of a univariate basis function $N_i$ and a control point coordinate $C_i$ (Expression (3)).

[Mathematical 2]

$$\mathbf{J}_1 = \frac{\partial \xi}{\partial \tilde{\xi}} = \frac{1}{2} (\xi_{i+1} - \xi_i) \qquad (2)$$

[Mathematical 3]

$$\mathbf{c}(\xi) = \sum_{i=1}^{n} N_i(\xi)\, \mathbf{C}_i\,, \qquad \xi \in \mathbb{R};\ \mathbf{c}, \mathbf{C}_i \in \mathbb{R}^3 \qquad (3)$$

In single-parameter formulation, a field of displacement, strain, or the like can be expressed using the same reference. In this case, the control point coordinate $C_i$ is replaced with a control parameter. For example, a displacement field is expressed by Expression (4), and the Jacobian from a physical space to a parametric space is expressed by Expressions (5) to (7).

[Mathematical 4]

$$\mathbf{u}(\xi) = \sum_{i=1}^{n} N_i(\xi)\, \mathbf{d}_i\,, \qquad \xi \in \mathbb{R};\ \mathbf{u}, \mathbf{d}_i \in \mathbb{R}^3 \qquad (4)$$

[Mathematical 5]

$$\mathbf{J}_2 = \frac{\partial \boldsymbol{x}}{\partial \xi} = \left[ \frac{\partial x}{\partial \xi} \quad \frac{\partial y}{\partial \xi} \quad \frac{\partial z}{\partial \xi} \right]^T \qquad (5)$$

[Mathematical 6]

$$|\mathbf{J}_2| = \sqrt{\left(\frac{\partial x}{\partial \xi}\right)^2 + \left(\frac{\partial y}{\partial \xi}\right)^2 + \left(\frac{\partial z}{\partial \xi}\right)^2} \qquad (6)$$

[Mathematical 7]

$$\frac{\partial x}{\partial \xi} = \sum_{i=1}^{n} \frac{\partial N_i}{\partial \xi} C_{xi} \, , \qquad \frac{\partial y}{\partial \xi} = \sum_{i=1}^{n} \frac{\partial N_i}{\partial \xi} C_{yi} \, , \qquad \frac{\partial z}{\partial \xi} = \sum_{i=1}^{n} \frac{\partial N_i}{\partial \xi} C_{zi} \qquad (7)$$

B-spline and NURBS basis function

A basis function is used for expressing both of a field of shape and a field of solution, and therefore is an important part in single-parameter formulation and single-shape analysis. A univariate B-spline basis function with an order p is defined by a Cox-de Boor recursive formula (see Expression (8)).
[Mathematical 8]

$$N_{i,0}(\xi) = \begin{cases} 1 & \text{, if } \xi_i \le \xi < \xi_{i+1} \\ 0 & \text{, otherwise} \end{cases} , \text{ and}$$

$$N_{i,p}(\xi) = \frac{\xi - \xi_i}{\xi_{i+p} - \xi_i} N_{i,p-1}(\xi) + \frac{\xi_{i+p+1} - \xi}{\xi_{i+p+1} - \xi_{i+1}} N_{i+1,p-1}(\xi) \qquad (8)$$

In Expression (8), $\xi$ is a parameter, and $\xi_i$ is an ith knot value of a knot vector $\Xi = \{\xi_1, \xi_2, ..., \xi_{n+p+1}\}$. In addition, the knot vector is a set of real numbers which do not decrease in a parametric space. Here, the first and last control points match a physical geometry. In addition, a normalized knot between 0 and 1 is always used.
The NURBS basis function is formed by B-spline projection transformation in order to enable accurate expression of a conic curve. A univariate NURBS basis is defined by Expression (9). Atrivariate NURBS basis function is defined by Expression (10) as a tensor product of the univariate B-spline basis function and each weight.
[Mathematical 9]

$$R_i^p(\xi) = \frac{N_{i,p}(\xi) w_i}{\sum_{i=1}^{n} N_{i,p}(\xi) w_i} \qquad (9)$$

[Mathematical 10]

$$R_{i,j,k}^{p,q,r}(\xi, \eta, \zeta) = \frac{N_{i,p}(\xi) M_{j,q}(\eta) L_{k,r}(\zeta) w_{i,j,k}}{\sum_{i=1}^{n} \sum_{j=1}^{m} \sum_{k=1}^{l} N_{i,p}(\xi) M_{j,q}(\eta) L_{k,r}(\zeta) w_{i,j,k}} \qquad (10)$$

In actuality, weight values are assigned to control points, and are called in evaluation of a basis function. A first derivative of the B-spline basis function is defined by Expression (11). A first derivative of the NURBS basis function is defined by Expression (12). A derivative of a physical function can be acquired using the Jacobian (see Expression (13)).
[Mathematical 11]

$$\frac{d}{d\xi} N_{i,p}(\xi) = \frac{p}{\xi_{i+p} - \xi_i} N_{i,p-1}(\xi) - \frac{p}{\xi_{i+p+1} - \xi_{i+1}} N_{i+1,p-1}(\xi) \qquad (11)$$

[Mathematical 12]

$$\frac{d}{d\xi} R_{i,p}(\xi) = w_i \frac{\frac{d}{d\xi} N_{i,p}(\xi). \sum_{j=1}^{n} N_{j,p}(\xi)w_j - N_{i,p}(\xi). \sum_{j=1}^{n} \frac{d}{d\xi} N_{j,p}(\xi)w_j}{\left[\sum_{j=1}^{n} N_{j,p}(\xi)w_j\right]^2} \qquad (12)$$

[Mathematical 13]

$$\frac{dN(\xi)}{dx} = \frac{dN(\xi)}{d\xi}\frac{d\xi}{dx} = \frac{dN(\xi)}{d\xi}|J_2^{-1}| \qquad (13)$$

To sum up, in a case of defining a NURBS shape and a derivative thereof, a basis function, a knot vector, a control point coordinate, and an order of a weight vector are needed. The NURBS basis function has the following features.

a) Non-negativity
b) Partition of unity (the sum of the basis function is 1).
c) Locality (support or influence of the basis function covers only a limited area in a shape)
d) Convex hull (a shape is always inside a control polygon)
e) Affine covariance (a shape is transformed by the same method as for a control point)

IGA

Implicit elastic IGA is the same as conventional FEM except for a basis function, connectivity, and use of a control point instead of a node point. In this section, linear IGA formulation for a solid structure will be briefly described.
Using the principle of virtual work, potential energy in a domain of definition S2 is expressed by Expression (14). After discretization of the domain of definition S2 by a shape function (Ni), a strain distribution is calculated by Expression (15) from a strain-displacement relationship obtained from a derivative of a displacement field.
[Mathematical 14]

$$\Pi = \int_{\Omega} \boldsymbol{\varepsilon}^T \boldsymbol{\sigma}\, d\Omega - \int_{\Omega} \boldsymbol{u}^T \boldsymbol{b}\, d\Omega - \int_{\Omega} \boldsymbol{u}^T \boldsymbol{t}\, d\Omega \qquad (14)$$

[Mathematical 15]

$$\boldsymbol{\varepsilon} = \mathbf{Bd} \qquad (15)$$

Here, B is a strain-displacement matrix and is expressed by Expression (16).
[Mathematical 16]

$$\mathbf{B} = \begin{bmatrix} N_{1,x} & 0 & 0 & \cdots & N_{n,x} & 0 & 0 \\ 0 & N_{1,y} & 0 & \cdots & 0 & N_{n,y} & 0 \\ 0 & 0 & N_{1,z} & \cdots & 0 & 0 & N_{n,z} \\ N_{1,y} & N_{1,x} & 0 & \cdots & N_{n,y} & N_{n,x} & 0 \\ 0 & N_{1,z} & N_{1,y} & \cdots & 0 & N_{n,z} & N_{n,y} \\ N_{1,z} & 0 & N_{1,x} & \cdots & N_{n,z} & 0 & N_{n,x} \end{bmatrix} \qquad (16)$$

In addition, stress $\sigma$ can be derived from the relationship between strain and a constituent element at each component of a material matrix D (Expression (17)).

[Mathematical 17]

$$\boldsymbol{\sigma} = \mathbf{D}\boldsymbol{\varepsilon} \qquad (17)$$

The potential energy can be acquired by Expression (18), and a steady state with minimum energy can be acquired using a derivative with respect to a discretized displacement, as shown in Expression (19) and Expression (20).
[Mathematical 18]

$$\Pi = \sum_{e=1}^{n_e} \left[ \int_{\Omega_e} \mathbf{B}^{\mathrm{T}}\mathbf{d}^{\mathrm{T}}\mathbf{D}\mathbf{B}\mathbf{d}\, \mathrm{d}\Omega_e - \int_{\Omega_e} \mathbf{N}^{\mathrm{T}}\mathbf{d}^{\mathrm{T}}\mathbf{b}\, \mathrm{d}\Omega_e - \int_{\Gamma_e} \mathbf{N}^{\mathrm{T}}\mathbf{d}^{\mathrm{T}}\mathbf{t}\, d\Gamma_e \right] \qquad (18)$$

[Mathematical 19]

$$\frac{\partial \Pi}{\partial \mathbf{d}} = 0 \qquad (19)$$

[Mathematical 20]

$$\sum_{e=1}^{n_e} \left[ \int_{\Omega_e} \mathbf{B}^{\mathrm{T}}\mathbf{D}\mathbf{B}\mathbf{d}\, \mathrm{d}\Omega_e - \int_{\Omega_e} \mathbf{N}^{\mathrm{T}}\mathbf{b}\, \mathrm{d}\Omega_e - \int_{\Gamma_e} \mathbf{N}^{\mathrm{T}}\mathbf{t}\, d\Gamma_e \right] = 0 \qquad (20)$$

Finally, a stiffness matrix and a force vector of an element can be expressed by Expression (21) and Expression (22).
[Mathematical 21]

$$\mathbf{K}_e = \int_{\Omega_e} \mathbf{B}^{\mathrm{T}}\mathbf{D}\mathbf{B}\, \mathrm{d}\Omega_e \qquad (21)$$

[Mathematical 22]

$$\mathbf{f}_e = \int_{\Omega_e} \mathbf{N}^{\mathrm{T}}\mathbf{b}\, \mathrm{d}\Omega_e + \int_{\Gamma_e} \mathbf{N}^{\mathrm{T}}\mathbf{t}\, d\Gamma_e \qquad (22)$$

After the global stiffness matrix and the force matrix are created, a discretized displacement at a control point can be found by a system of linear simultaneous equations (Expression (23), Expression (24)). Then, distributions of strain and stress can be calculated by the above Expression (15) and Expression (17).
[Mathematical 23]

$$\mathbf{K}_e \Rightarrow \mathbf{K}, \qquad \mathbf{f}_e \Rightarrow \mathbf{f} \qquad (23)$$

[Mathematical 24]

$$\mathbf{K}\mathbf{d} = \mathbf{f} \qquad (24)$$

Fiber mesh (optical fiber mesh)

Under the assumption that the mass and stiffness of an optical fiber hardly contribute to a structure system that is a measurement target, the shape of the optical fiber can be expressed as a three-dimensional univariate parametric NURBS curve. With a parametric fiber coordinate set as $\xi$, a physical coordinate x (hereinafter, may be referred to as a global coordinate x) can be calculated by Expression (25) as a function of $\xi$. Thus, a one-dimensional physical fiber coordinate can be regarded as an arc length $s(\xi)$ of a curve derived by Expression (26).

[Mathematical 25]

$$\mathbf{x}(\xi) = \sum_{i=1}^{n} N_i(\xi)\mathbf{C}_i \qquad (\,25\,)$$

[Mathematical 26]

$$s(\xi) = \int_0^s ds = \int_0^\xi |\mathbf{J}_2|\, d\xi \qquad (\,26\,)$$

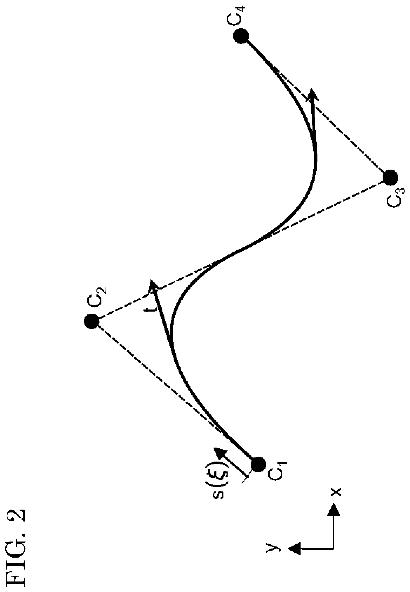

In calculation of fiber strain described below, a tangent vector at a sampling point of a fiber is needed. A unit tangent vector of the fiber at the parameter $\xi$ can be derived by Expression (27) and Expression (28). Here, FIG. 2 shows an example of a second-order two-dimensional NURBS curve. In FIG. 2, four control points ($\mathbf{C}_1$ to $\mathbf{C}_4$) and a tangent vector t are shown.

[Mathematical 27]

$$\tilde{\mathbf{t}}(\xi) = \frac{d\mathbf{x}(\xi)}{d\xi} = \sum_{i=1}^{n} \frac{dN_i(\xi)}{d\xi}\mathbf{C}_i \qquad (\,27\,)$$

[Mathematical 28]

$$\mathbf{t}(\xi) = \frac{\tilde{\mathbf{t}}(\xi)}{\|\tilde{\mathbf{t}}(\xi)\|} \qquad (\,28\,)$$

Transformation from strain tensor to fiber strain

By solving simultaneous equations of Expression (24), a strain distribution of the fiber is calculated from Expression (15). For calculating one-dimensional fiber strain, a strain tensor of a surface of a structure to which the fiber is attached is used together with a tangent vector at a sampling point of the fiber. The one-dimensional fiber strain at a sampling point S corresponding to the global coordinate x can be calculated by projecting the strain tensor in the tangent direction of the fiber (see Expression (29) and Expression (30)).

[Mathematical 29]

$$\overline{\varepsilon_f}(s) = \mathbf{t}^{\mathbf{T}}\boldsymbol{\varepsilon}\,\mathbf{t} \qquad (\,29\,)$$

[Mathematical 30]

$$\varepsilon(x(s)) = \begin{bmatrix} \varepsilon_{xx} & \varepsilon_{xy} & \varepsilon_{xz} \\ \varepsilon_{yx} & \varepsilon_{yy} & \varepsilon_{yz} \\ \varepsilon_{zx} & \varepsilon_{zy} & \varepsilon_{zz} \end{bmatrix} \qquad (30)$$

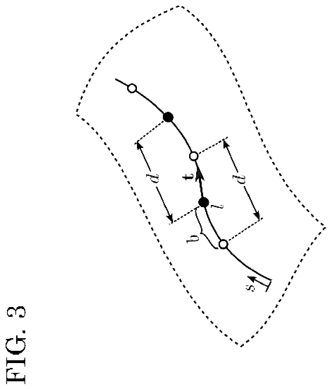

In actuality, the fiber strain is not single-point strain but is averaged over a distance d (hereinafter, may be referred to as a length d) between two black circles as shown in FIG. 3. Thus, moving average fiber strain over the length d (same as moving average window) at a sampling position l is expressed by Expression (31) and Expression (32). In FIG. 3, b is a sampling interval, and the length d is also a sampling resolution.

[Mathematical 31]

$$\varepsilon_f(l) = \frac{1}{d} \int_{l-\frac{d}{2}}^{l+\frac{d}{2}} \bar{\varepsilon}_f(s)\,ds \qquad (31)$$

[Mathematical 32]

$$\varepsilon_f(l) = \frac{1}{d} \sum_{i=1}^{nipt} \bar{\varepsilon}_f(s_i) |\mathbf{J}_{1i}||\mathbf{J}_{2i}| w_i \qquad (32)$$

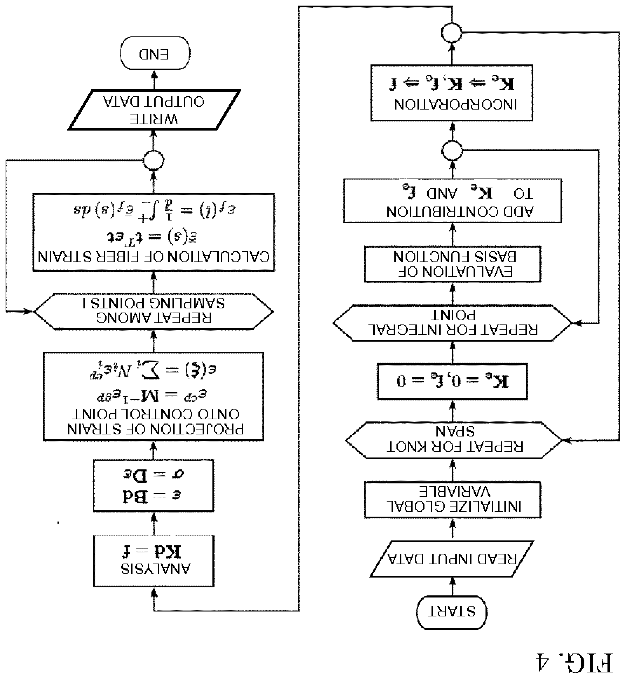

FIG. 4 shows a flowchart summing up the elastic stress analysis and the fiber strain calculation at all sampling points.

Advantages of IGA and DFOS

Main advantages by formulation of integrated IGA and DFOS are as follows.

In the IGA, for an efficient flow of CAE work, CAD data of a structure and an optical fiber can be used in a format of a NURBS control point and a knot vector. Also, it is possible to perform efficient and accurate calculation by implementing an existing simple geometric algorithm in an analysis code. Further, in terms of the total degree of freedom of IGA, many researchers have verified high efficiency and a capability of representing an accurate shape, irrespective of an analysis mesh size.

As compared to a strain gauge, the DFOS can provide distribution strain data with a simple setting, and has a remote monitoring function with high spatial resolution, over a long distance (25 km), and for 24 hours a day and every day of the year. A Rayleigh backscatter sensor has higher spatial resolution than a fiber Bragg grating (FBG) sensor. A fiber mesh requires only the shape of a fiber and measurement information thereon as inputs, and therefore does not depend on the type of a fiber strain sensor. Using the fiber mesh and inverse analysis (described later in detail), real-time structure states such as deformation, load, stress, and strain distribution can be inferred from observed fiber strain data.

Specific contents of the newly developed remote structure monitoring system are summed up as the following three items.

A technology for forward analyzing the entire phenomenon by inputting measured strain of a (partial) distribution type on a line of an optical fiber into a fiber-mesh-incorporated IGA analysis model, has been developed. In conventional art, data measured by an optical fiber has been used only for verifying a theoretical numerical analysis result.

A technology for performing inverse analysis so as to match measured strain of a distribution type by setting a load condition, a boundary condition, and defect/material deterioration which are needed for fiber-mesh-incorporated IGA analysis as unknowns, has been developed (an unknown boundary condition or the like is estimated from DFOS strain data).

A fiber-mesh-incorporated IGA analysis tool uses a technology of connection continuity (denoted by C1; hereinafter, the same applies) of a displacement field, and therefore matches continuity (C 1) of a tangent, which is one of installation characteristics of an optical fiber, thus ensuring accuracy as an element technology. In the conventional finite element method, continuity (denoted by C0; hereinafter, the same applies) of a displacement field is ensured but continuity (C1) of a tangent is not ensured (see FIG. 2; here, in the conventional finite element method, given points are four points, i.e., a point $C_1$, a point $C_2$, a point $C_3$, and a point $C_4$ shown in FIG. 2, and continuity of a displacement field is realized by the four points (realized by lines between the point $C_1$ and the point $C_2$, between the point $C_2$ and the point $C_3$, and between the point $C_3$ and the point $C_4$ shown in FIG. 2), but a curve connecting the point $C_1$ and the point $C_4$ is not originally given.

On the other hand, in the newly developed fiber-mesh-incorporated IGA analysis model, a curve connecting the point $C_1$ and the point $C_4$ in FIG. 2 is given by a NURBS model (in the NURBS model, the point $C_1$, the point $C_2$, the point $C_3$, and the point $C_4$ are also called control points), and therefore a tangent exists at any point on the curve between the point $C_1$ and the point $C_4$ (see the tangent vector t at a representative point in FIG. 2). That is, there is continuity of a tangent. Thus, points to be given are only the point $C_1$ and the point $C_4$ at minimum, so that a point setting time is shortened as compared to the finite element method).

Effects of the integrated IGA-DFOS system of Embodiment 1 described above can be summed up as follows.

Regarding a method for installation of an optical fiber from a designing stage, a unified realization method using a CAD tool including an analysis model is established, whereby a seamless analysis model can be created.

From long-distance measurement information by the optical fiber in real time, it is possible to analyze information about theoretically unpredictable deformation and load due to contact, etc., or inside of a monitoring target where the optical fiber is not directly installed.

By collecting temporal transition data of a monitoring target, it is possible to infer change in the monitoring target or the remaining life thereof.

It is possible to update change in information of a monitoring target due to an unforeseen event such as an earthquake and an improvement effect based on repair of a monitoring target.

EXAMPLES

Next, regarding elastic stress and strain analysis, an application example of the above-proposed formulation using the integrated IGA and DFOS will be described on the basis of an experimental model using a cylindrical pipe.

Experiment using cylindrical pipe

In order to verify the developed method, the following experiment was conducted: a vinyl-chloride cylindrical pipe having an outer diameter of 300 mm, a length of 254 mm, and a thickness of 5 mm (Young's modulus: 2.8 GPa, Poisson's ratio: 0.38) was deformed and produced strain was measured. An experimental apparatus used in this experiment will be described below.

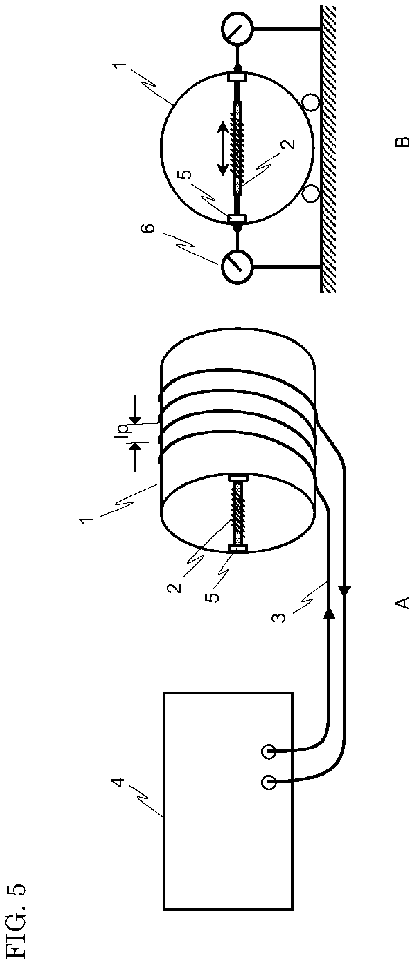

FIG. 5A and FIG. 5B schematically show the experimental apparatus for the test. As shown in FIG. 5A, at a center position on the inner circumference of a vinyl-chloride cylindrical pipe 1, a screw bar 2 having a length corresponding to the diameter of the cylinder was placed, and around the outer circumference of the cylinder, an optical fiber 3 coated with a tape on the outer side was helically wound by four turns with a pitch lp set at 33 mm. Coordinate positions (fiber coordinates) of the optical fiber on the cylinder surface are marked so as to be used in simulation later. Both ends of the optical fiber are connected to an input terminal and an output terminal of a distribution-calculation-type optical fiber measurement device 4.

As shown in FIG. 5B, the screw bar 2 placed at the center part (diameter position of cylindrical pipe) of the cylindrical pipe 1 is rotated to apply a load to the cylindrical pipe 1. At this time, the load is distributed in the length direction of the pipe by a pair of rectangular beams 5 provided at inner circumferential parts of the cylindrical pipe. The total displacement caused by the load is measured by two dial gauges 6 provided at outer circumferential parts of the cylindrical pipe 1 that correspond to the placement position of the screw bar 2. Strain (DFOS strain) distributed in the cylinder is measured by the distribution-calculation-type optical fiber measurement device 4 for the test using Rayleigh backscatter light which is accurate and high in spatial resolution. For measuring strain of the optical fiber at intervals of 1 cm, in particular, a TW-COTDR measurement mode was used.

Next, the experiment procedure will be described.

In order to confirm response of optical fiber strain to deformation of the cylindrical pipe, the experiment was conducted for five displacement cases denoted by M1 to M5. Specific displacement values are as follows: M1 = 172 $\mu$m, M2 = 308 $\mu$m, M3 = 534 $\mu$m, M4 = 755 $\mu$m, M5 = 887 $\mu$m. As parameters in the experiment, the sampling interval for fiber strain is 1 cm, spatial resolution defined by a moving average distance of fiber strain measurement is 2 cm, and reproducibility of strain is $\pm$ 1 $\mu\varepsilon$.

Before the experiment, a reference strain distribution under minimum deformation of the pipe is acquired. Next, the screw bar 2 is rotated to provide displacement by a certain amount (1 stroke). As the net displacement, the average of reading values of the two dial gauges is calculated. With the displacement, the cylindrical pipe is deformed into an elliptic shape, and the deformation is detected as 1D (one-dimensional) strain by the optical fiber. The value of reference strain is subtracted from the measured strain, to obtain a true value. After strain of the optical fiber is recorded, the stroke is increased and the process is repeated, to acquire strain of the optical fiber for all the load cases.

Strain measurement for optical fiber

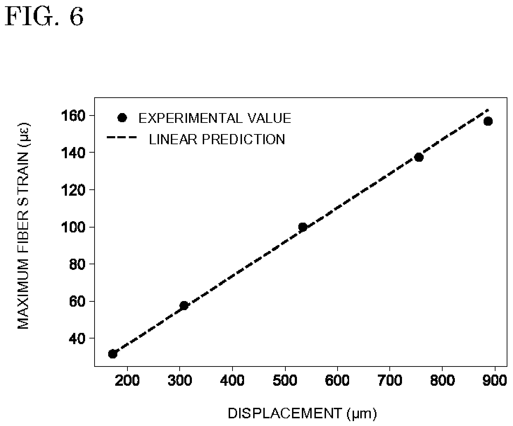

Since the cylindrical pipe was deformed into an elliptic shape, strain of the optical fiber had a waveform oscillating between a positive value (tensile strain) and a negative value (compressive strain) with respect to the fiber coordinates. Accordingly, regarding optical fiber strain with respect to the magnitude of deformation of the cylindrical pipe, the value of maximum strain of the optical fiber and the displacement value of the cylindrical pipe are plotted as shown in FIG. 6. In FIG. 6, it is found that strain of the optical fiber changes linearly with respect to the displacement value of the cylindrical pipe. Thus, it is considered that a linear model can be used in numerical analysis simulation.

Forward IGA simulation using idealized boundary condition

A model of a cylindrical pipe and an optical fiber is simulated by forward IGA using a simple boundary condition, and a simulation result is compared with the experimental data.

Accordingly, first, a shape (geometry) and an analysis mesh will be described below.

A NURBS shape of a cylindrical pipe for the test was created using a trivariate quadratic function and 81 control points, thus representing a hollow cylinder accurately. In this standard structure, three C0 continuous lines are set along the circumference, and the basis function is C1 continuous at all the other points, so that this is suitable for analysis.

In addition, in order to create a finer mesh and enhance analysis accuracy, h refinement using knot insertion was executed. In this refinement, without changing the shape, the analysis mesh was composed of 611 knot elements (knot spans) and 2205 control points.

Further, as an accompanying fiber shape, a helical curve was created using a univariate quadratic function and 33 control points.

First, the boundary condition will be described. Since the control points of the NURBS shape are not interpolated ones, displacement of the control points is different from the actual displacement of the shape. Control point displacement needed for a given displacement distribution is derived using interpolation or fitting. However, in a case where there is a C0 continuous region where interpolation is possible, direct application is possible. In simulation of the cylindrical pipe model, uniform displacement was applied along the pipe inner surface (at $X = Y = Z = 0$, $Ux = Uy = Uz = 0$; at $X = Y = 0$ and $Z = Z$, $Ux = Uy = 0$). In addition, since the shape is interpolated with control points, displacement values are directly applied to the control point.

Next, a result of the simulation and data obtained by the experiment will be compared.

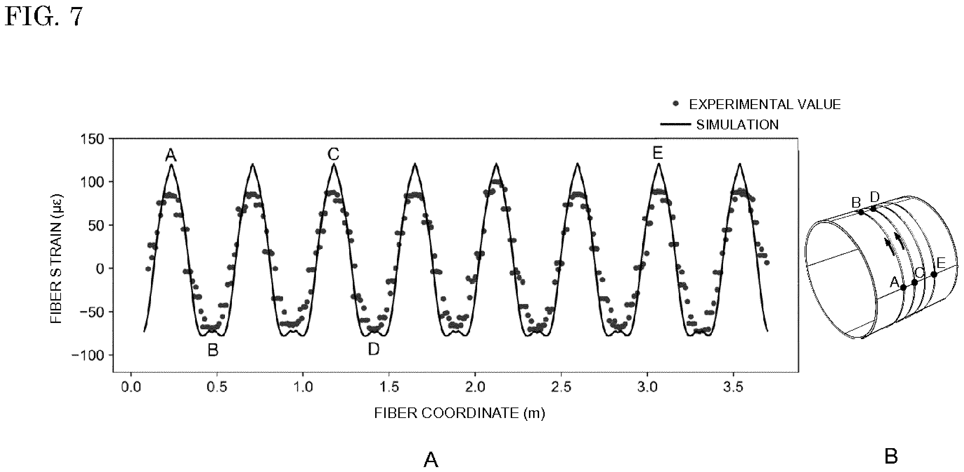

FIG. 7A shows a graph in which the simulation result of a fiber strain distribution and the experimental data are superimposed, in the load case 3 (case M3). FIG. 7B shows positions on the cylinder that correspond to coordinates A to E shown in FIG. 7A. From FIG. 7A, it is found that the tendency of the simulation result is exactly in accordance with the experimental data, except for peak values.

The reason why the peak values of the simulation result are greater than those of the experimental data is considered to be that an ideal concentrated load was assumed in the simulation. In addition, there is a possibility that the load distribution assumed to be uniform in the simulation was actually not uniform. The same tendency has been observed also in the load case 4.

Estimation of boundary condition using inverse IGA

In the above section, fiber strain on the tensile side was predicted to be excessive by the simulation. It has been pointed out in the above section that discrepancy between a simulation value and experimental data might be due to boundary condition difference therebetween. On an actual site, the boundary condition is often unclear. Meanwhile, the load is an important parameter for determining the structure and safety, and therefore it is considered that a numerical method for estimating the boundary condition from available fiber strain data is advantageous. Accordingly, this method will be described below.

To conclude first, the above boundary condition can be estimated by minimizing error between the observed fiber strain and the simulated fiber strain using an optimization approach. This method in which the boundary condition which is an unknown variable is estimated from fiber strain which is known experimental data is called inverse IGA. Then, the estimated boundary condition is used in forward simulation, whereby distributions of displacement and stress can be acquired.

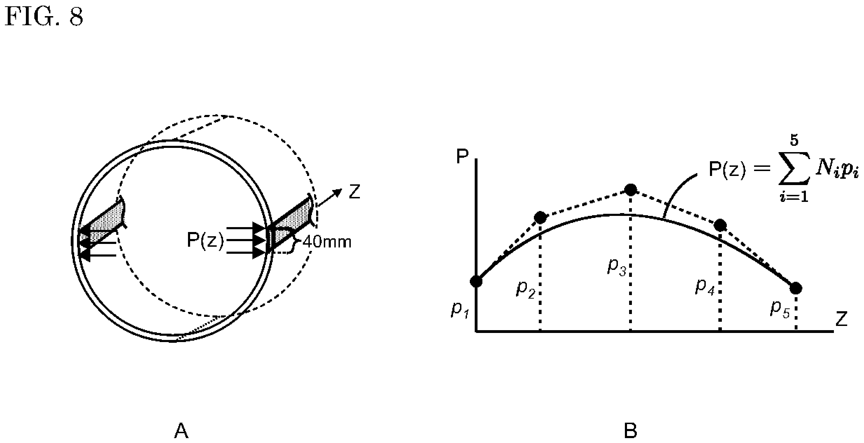

Next, estimation for the boundary condition using a cylindrical pipe model will be described. Here, the above inverse IGA will be described using the above-described cylindrical pipe model. An unknown load along the cylindrical pipe is defined as a pressure distribution in a surface area of the cylindrical pipe that is in contact with the rectangular bar (see FIG. 8A). Pressure change along the length direction (Z direction) of the cylindrical pipe is expressed by a second-order B-spline function having five coefficients as parameters, as shown in FIG. 8B. For adapting fiber strain using optimization, an objective function E is defined as the sum of squares of errors between the observed fiber strain and the calculated fiber strain at respective sampling points along the fiber (see Expression (33)).

[Mathematical 33]

$$\min_{p_i \in \mathbb{R}^5} E = \sum_{i=1}^{n_S} \left( \varepsilon_{fi}^* - \varepsilon_{fi} \right)^2 \qquad (33)$$

In this expression, $\varepsilon_f$ is the moving average fiber strain defined in Expression (31). The objective function E is minimized with respect to an optimization parameter $p_i$ of the pressure distribution function in FIG. 8B, and is subjected to a least squares method, to obtain an optimum solution. A criterion for finishing optimization is that $\Delta E$ which is the value of difference between consecutive repetitive calculations is less than $10^{-4}$ $\mu\varepsilon$.

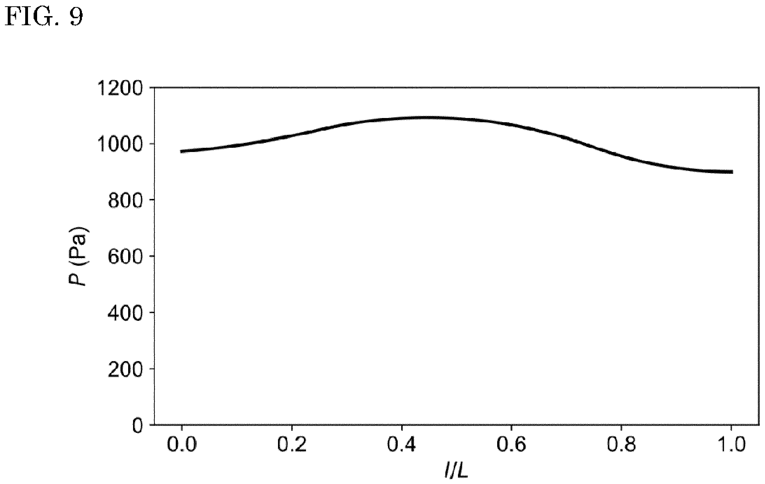

Next, a simulation result of inverse IGA will be described. First, FIG. 9 shows a result of an optimized pressure distribution based on input fiber strain in the load case 3. From FIG. 9, it is found that the pressure distribution does not have constant values but has high pressures at a center part of the pipe.

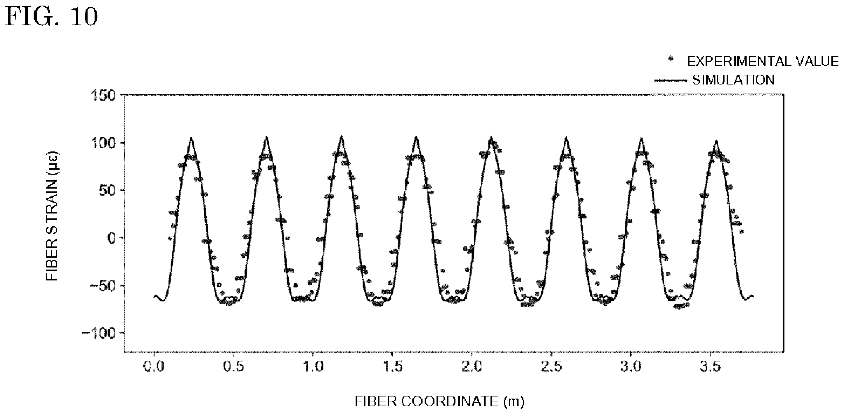

FIG. 10 shows a simulation result of optimized fiber strain. From FIG. 10, it is found that, as compared to the case of FIG. 7, difference between the simulation result and the experimental data is smaller and the degree of coincidence therebetween is higher.

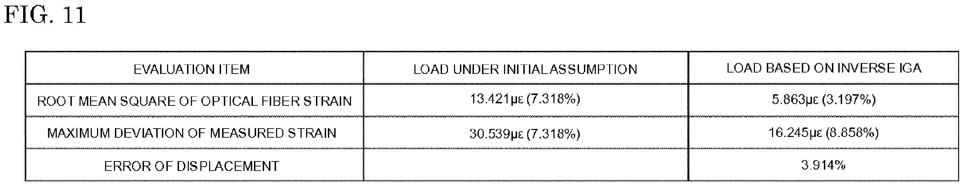

FIG. 11 shows a result of numerical evaluation of effects by the inverse IGA. From this table, it is found that, in the inverse IGA, both of the root mean square and the maximum deviation of errors of the optical fiber strain are approximately halved as compared to the forward analysis, and thus the inverse IGA is effective.

The above inverse IGA is applicable to analysis of observed data based on not only an optical fiber for strain measurement but also a combination with another sensor such as a pressure sensor or a temperature sensor.

Although the invention is described above in terms of an exemplary embodiment, it should be understood that the various features, aspects, and functionality described in the embodiment are not limited in their applicability to the particular embodiment with which they are described, but instead can be applied alone or in various combinations to the embodiment of the invention.

It is therefore understood that numerous modifications which have not been exemplified can be devised without departing from the scope of the present invention. For example, at least one of the constituent components may be modified, added, or eliminated. Specifically, the above description has been given under the assumption that modeling by the non-uniform rational B-spline basis function is performed using the CAD tool. However, regarding the method for installation of an optical fiber from a designing stage, any method that is unified by another tool including an analysis model and can create a seamless analysis model may be used instead of using the CAD tool.

DESCRIPTION OF THE REFERENCE CHARACTERS

1    cylindrical pipe
2    screw bar
3    optical fiber
4    distribution-calculation-type optical fiber measurement device
5    beam
6    dial gauge

**Claims**

**1.** An integrated IGA-DFOS system comprising:

an optical fiber which is attached to a measurement target and senses a physical quantity of the measurement target;
a distribution-calculation-type optical fiber measurement device which calculates the physical quantity of the measurement target on the basis of a sensing signal detected by the optical fiber and obtains a distribution state of the physical quantity; and
a fiber-mesh-incorporated IGA analysis tool having incorporated therein a fiber mesh which is modeled by a non-uniform rational B-spline basis function and forms a shape of the optical fiber, wherein
the distribution state of the physical quantity of the measurement target at an attachment position of the optical fiber, measured by the distribution-calculation-type optical fiber measurement device, is inputted to the fiber-mesh-incorporated IGA analysis tool, to obtain a distribution state of the physical quantity of the measurement target at a position other than the attachment position of the optical fiber.

2. The integrated IGA-DFOS system according to claim 1,
wherein modeling by the non-uniform rational B-spline basis function is performed using a CAD tool.

3. The integrated IGA-DFOS system according to claim 1 or 2,
wherein values given in advance are used as values of a load condition, a boundary condition, and material defect or deterioration for obtaining the distribution state of the physical quantity of the measurement target at the position other than the attachment position of the optical fiber.

4. The integrated IGA-DFOS system according to claim 1 or 2,
wherein values of a load condition, a boundary condition, and material defect or deterioration for performing analysis by the fiber-mesh-incorporated IGA analysis tool are set as unknowns, the values of the load condition, the boundary condition, and the material defect or deterioration which are the unknowns are obtained through inference by a prescribed inference method, using the fiber-mesh-incorporated IGA analysis tool, so as to match the distribution state of the physical quantity obtained by the distribution-calculation-type optical fiber measurement device, and the distribution state of the physical quantity of the measurement target is obtained through analysis using the obtained inferred values.

5. The integrated IGA-DFOS system according to any one of claims 1 to 4, wherein the non-uniform rational B-spline basis function of the fiber-mesh-incorporated IGA analysis tool has continuity with respect to a position of the measurement target and continuity with respect to change of the position.

# FIG. 1

Flowchart:

- STRENGTH
- APPEARANCE AND DESIGN
- MATERIAL SELECTION
- COST
- RISK FACTOR
- ASSUMED LOAD AND USAGE ENVIRONMENT
- INFLUENCE OF CORROSION, EARTHQUAKE, ETC.

→ CAD DESIGNING

→ NURBS MODEL

→ CONSTRUCTION/ MANUFACTURING OF STRUCTURE

→ OPTICAL FIBER INSTALLATION PLAN

→ DISTRIBUTED FIBER OPTIC SENSING MEASUREMENT SYSTEM (MEASUREMENT FOR STRAIN, TEMPERATURE, ETC.)

→ IGA NUMERICAL ANALYSIS MODEL INCLUDING OPTICAL FIBER MESH

→ REMOTE MONITORING FOR INSTANT DEFORMATION AND LOAD CONDITION

→ DEFORMATION, LOAD, AND SHAPE, INCLUDING PART WHERE OPTICAL FIBER IS NOT INSTALLED

→ MANAGEMENT OF SAFETY, FUNCTIONALITY, REMAINING LIFE, AND MAINTENANCE PLAN

EP 4 390 330 A1

FIG. 2

FIG. 3

# FIG. 4

START

READ INPUT DATA

INITIALIZE GLOBAL VARIABLE

REPEAT FOR KNOT SPAN

$$\mathbf{K_e} = 0, \mathbf{f_e} = 0$$

REPEAT FOR INTEGRAL POINT

EVALUATION OF BASIS FUNCTION

ADD CONTRIBUTION TO $\mathbf{K_e}$ AND $\mathbf{f_e}$

INCORPORATION $\mathbf{K_e} \Rightarrow \mathbf{K}, \mathbf{f_e} \Rightarrow \mathbf{f}$

ANALYSIS $\mathbf{Kd} = \mathbf{f}$

$$\boldsymbol{\varepsilon} = \mathbf{Bd}$$
$$\boldsymbol{\sigma} = \mathbf{D}\boldsymbol{\varepsilon}$$

PROJECTION OF STRAIN ONTO CONTROL POINT
$$\boldsymbol{\varepsilon}^{cp} = \mathbf{M}^{-1}\boldsymbol{\varepsilon}^{gp}$$
$$\varepsilon(\boldsymbol{\xi}) = \sum_i N_i \varepsilon_i^{cp}$$

REPEAT AMONG SAMPLING POINTS I

CALCULATION OF FIBER STRAIN
$$\bar{\varepsilon}(s) = \mathbf{t}^T \boldsymbol{\varepsilon} \mathbf{t}$$
$$\varepsilon_f(l) = \frac{1}{d}\int_-^+ \bar{\varepsilon}_f(s)\,ds$$

WRITE OUTPUT DATA

END

FIG. 5

A

B

EP 4 390 330 A1

FIG. 6

FIG. 7

A

B

EP 4 390 330 A1

FIG. 8

A

B

$$P(z) = \sum_{i=1}^{5} N_i p_i$$

EP 4 390 330 A1

FIG. 9

EP 4 390 330 A1

EP 4 390 330 A1

FIG. 10

FIG. 11

EP 4 390 330 A1

| EVALUATION ITEM | LOAD UNDER INITIAL ASSUMPTION | LOAD BASED ON INVERSE IGA |
|---|---|---|
| ROOT MEAN SQUARE OF OPTICAL FIBER STRAIN | 13.421με (7.318%) | 5.863με (3.197%) |
| MAXIMUM DEVIATION OF MEASURED STRAIN | 30.539με (7.318%) | 16.245με (8.858%) |
| ERROR OF DISPLACEMENT | | 3.914% |

## INTERNATIONAL SEARCH REPORT

| | International application No. |
|---|---|
| | **PCT/JP2021/030223** |

**A.    CLASSIFICATION OF SUBJECT MATTER**

*G01D 5/353*(2006.01)i
FI:    G01D5/353 A

According to International Patent Classification (IPC) or to both national classification and IPC

**B.    FIELDS SEARCHED**

Minimum documentation searched (classification system followed by classification symbols)

G01D5/353; G01B11/16; G01K11/32-11/324; G02B6/00; G06F17/00-17/18

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2010/061718 A1 (NEUBREX CO., LTD.) 03 June 2010 (2010-06-03) paragraphs [0002], [0018]-[0218], fig. 1-17 | 1-3, 5 |
| A | | 4 |
| Y | 角谷 将基ほか, SUMIYA, Masaki et al. 2次元Helmholtz方程式に対する周期アイソジオメトリック境界要素法の開発と高速多重極法による高速化, 計算工学講演会論文集 第21巻 [CD-ROM] Proceedings of the Conference on Computational Engineering and Science vol. 21, 31 May 2016, vol. 21, D-7-1, ISSN 1342-145X, in particular, chapter 1, Introduction chapter 1, [Introduction], (Development of periodic isogeometric boundary element method for 2D Helmholtz equation and acceleration by fast multipole method) | 1-3, 5 |
| A | | 4 |
| A | US 10915678 B1 (MSC.SOFTWARE CORPORATION) 09 February 2021 (2021-02-09) column 1, line 6 to column 2, line 62 | 1-5 |
| A | EP 3783572 A1 (REIF, Ulrich) 24 February 2021 (2021-02-24) paragraphs [0002]-[0003] | 1-5 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2021** | **02 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/030223**

**C.    DOCUMENTS CONSIDERED TO BE RELEVANT**

| Category* | Citation of document, with indication, where appropriate, of the relevant passages | Relevant to claim No. |
|---|---|---|
| A | JP 2021-51712 A (MUJIN INC) 01 April 2021 (2021-04-01)<br>paragraphs [0014]-[0031], fig. 1A-1F | 1-5 |

Form PCT/ISA/210 (second sheet) (January 2015)

## INTERNATIONAL SEARCH REPORT
### Information on patent family members

International application No.

**PCT/JP2021/030223**

| Patent document cited in search report | | | Publication date (day/month/year) | Patent family member(s) | | | Publication date (day/month/year) |
|---|---|---|---|---|---|---|---|
| WO | 2010/061718 | A1 | 03 June 2010 | US | 2011/0228255 | A1 | |
| | | | | paragraphs [0047]-[0234], fig. 1-17 | | | |
| | | | | EP | 2362190 | A1 | |
| | | | | CN | 102227615 | A | |
| | | | | RU | 2011126123 | A | |
| US | 10915678 | B1 | 09 February 2021 | (Family: none) | | | |
| EP | 3783572 | A1 | 24 February 2021 | (Family: none) | | | |
| JP | 2021-51712 | A | 01 April 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004048889 A1

- WO 2005003689 A1

**Non-patent literature cited in the description**

- Distributed fiber optic sensors for monitoring pressure and stiffness changes in out-of-round pipes. **K. LIM et al.** Struct. Control Health Monit. Wiley Online Library, 15 July 2015, vol. 23, 303-314
- **K. NISHIGUCHI et al.** Error analysis for 3D shape sensing by fiber-optic distributed sensors. *Proceedings of the 49th ISCIE International Symposium on Stochastic Systems Theory and Its Applications, Hiroshima,* 03 November 2017
- **Y MEI.** Error analysis for distributed fiber optic sensing technology based on Brillouin scattering. *Lucy Cavendish College,* August 2018

- **A PICCOLO et al.** Non-invasive tunnel convergence measurement based on distributed optical fiber strain sensing. *Smart Mater. Struct.,* 2019, vol. 28, 045008, https://doi.org/10.1088/1361-665X/ab04cc
- **K. KISHIDA et al.** Study of Optical Fibers Strain-Temperature Sensitivities Using Hybrid Brillouin-Rayleigh System. *PHOTONIC SENSORS,* 2014, vol. 4 (1), 1-11
- **Y YAMAUCHI et al.** A STUDY OF THE STABILITY, RELIABILITY, AND ACCURACY OF NEUBRESCOPE-BASED PIPE THINNING DETECTION SYSTEM. *The 3rd International Conference on Structual Health Monitoring of Intelligent Infrastructure, Vancouver, British Columbia, Canada,* 13 November 2007